# EUROPÄISCHE PATENTSCHRIFT

(11) **EP 1 972 874 B1**
(45) Veröffentlichungstag und Bekanntmachung des Hinweises auf die Patenterteilung: **13.02.2019**
(21) Anmeldenummer: 08004526.3
(22) Anmeldetag: 12.03.2008
(51) Int. Cl.: F25D 25/04

(54) **Automatisiertes Substanzenlager**
Automated substance warehouse
Stockage de substances automatisé

(30) Priorität: 20.03.2007 CH 4412007
(43) Veröffentlichungstag der Anmeldung: 24.09.2008
(73) Patentinhaber: LICONIC AG, 9493 Mauren (LI)
(72) Erfinder: Malin, Cosmas, 9493 Mauren (LI)
(74) Vertreter: Sutter, Kurt

(56) Entgegenhaltungen:
- EP-A- 0 035 452
- EP-A- 1 441 026
- EP-A- 1 447 441
- WO-A-98/05753
- WO-A-2004/028572
- WO-A-2006/074569
- WO-A-2007/004445
- FR-A- 2 788 042
- JP-A- 2004 131 249
- US-A- 5 233 844
- US-A- 5 240 139
- US-A- 5 435 685
- US-B2- 6 694 767

## Beschreibung

Die Erfindung bezieht sich auf einen Klimaschrank gemäss Oberbegriff von Anspruch 1.

Mit steigendem Automatisierungsgrad in der Medizinaltechnik steigt das Bedürfnis, Substanzen aus einem Langzeitlager automatisch bewirtschaften zu können. Zur Vermeidung chemischer Veränderungen der Substanzen werden diese vielfach bei möglichst tiefen Temperaturen gelagert. Hierbei kommen den Temperaturbereichen unter -80°C eine steigende Bedeutung zu. Der Transport von Lagergut bei diesen Tiefsttemperaturen stellt besondere Anforderungen an die Mechanik und Steuerung eines Lagersystems.

Bekannte Systeme verwenden einen Transportroboter, der in einem Gang zwischen Regalen mit Schubladen verfahrbar angeordnet ist. Der Roboter ist in der Lage, die Schubladen herauszuziehen und den Inhalt daraus zu entnehmen. Der Roboter fährt alsdann zu einer Peripherie am Ende des Ganges. Der Roboter verfährt dabei nur zwischen die Regale, wenn ein Zugriff erfolgt. Der Bereich der Peripherie weist eine höhere Temperatur als der Bereich der Gestelle auf.

Ein anderes System, welches in US 6 694 767 beschrieben wird, weist in einer Wanne angeordnete Kassetten auf, die vertikal herausziehbar sind. Ein Greifer entnimmt der herausgezogenen Kassette das Lagergut und transportiert es zur Peripherie. Der obere Bereich der Anordnung ist wärmer als der untere.

Nachteilig an den bekannten Systemen ist, dass sie entweder ausschliesslich für grosse Lagereinrichtungen geeignet sind, oder dass sie viel Raum ungenutzt lassen. Ferner lassen sich bei den bekannten Anordnungen Bearbeitungsvorrichtungen nicht ohne weiteres raumsparend unter Einhaltung der Standfläche integrieren.

US 5 435 685 beschreibt eine gekühlte Lagervorrichtung für Lebensmittel.

Ausgehend von US 6 694 767 stellt sich die Aufgabe, ein kompaktes Lagersystem bereitzustellen, welches für tiefe Temperaturen und kleine Geräte geeignet ist. Diese Aufgabe wird vom Gerät gemäss Anspruch 1 erfüllt.

Demgemäss ist also ein Vertikaltransportmechanismus vorgesehen, mit welchem die Objekte zwischen der unteren - kälteren Zone - und der oberen - wärmeren Zone - transportiert werden können. Die Objekte werden von einem Horizontaltransportmechanismus, welcher sich mindestens teilweise in der oberen Zone befindet, in horizontaler oder schräger Richtung zur Schleuse transportiert.

Vorzugsweise wird der Vertikaltransportmechanismus von einem Transportlift oder einem Paternostersystem gebildet.

Das vorgestellte Lagersystem eignet sich speziell für kleine und mittlere Lagergrössen sowie Lagersysteme mit integrierten Bearbeitungsvorrichtungen. Bei Systemen dieser Grösse sind gute Raumnutzung sowie einfache und kostengünstige Lösungen der Transportmechanismen von vordringlicher Bedeutung.

In einem zweiten bevorzugten Aspekt der Erfindung stellt sich die Aufgabe, einen Klimaschrank bereitzustellen, welcher insbesondere auch für sehr hohe Temperaturen geeignet ist. Diese Aufgabe wird dadurch gelöst, dass in der oberen Zone mindestens eine Heizung vorgesehen ist, mit welcher zumindest die obere Zone erwärmt und in der oberen Zone eine höhere Temperatur erzeugt wird als in der unteren Zone. Weiter ist ein Transportmechanismus vorgesehen, mit welchem die Objekte (13) zwischen der oberen Zone und der Schleuse hin- und herbewegt werden können.

Ein kompakter Aufbau wird dadurch erfüllt, dass in der Lagerzone mehrere, horizontal verfahrbare Träger angeordnet sind, welche die Lagerplätze tragen. Die Träger sind derart verschiebbar, dass bei jedem Träger die Bildung einer Transportlücke zur Aufnahme des Liftwagens ermöglicht wird. Dadurch kann die Transportkapazität in horizontaler Richtung erhöht werden.

Weitere bevorzugte Ausführungen sowie Anwendungen der Erfindung ergeben sich aus den abhängigen Ansprüchen sowie aus der nun folgenden Beschreibung anhand der Figuren. Dabei zeigen
Figur 1 eine erste Ansicht eines Klimaschranks,
Figur 2 ein Regal und den Transportlift der Ausführung nach Figur 1,
Figur 3 eine zweite Ausführung eines Klimaschranks (nicht beansprucht) von oben mit abgenommener Abdeckung,
Figur 4 einen vertikalen Schnitt durch den Klimaschrank nach Figur 3,
Figur 5 eine dritte Ausführung eines Klimaschranks (nicht beansprucht) von oben mit abgenommener Abdeckung,
Figur 6 einen vertikalen Schnitt durch den Klimaschrank nach Figur 5,
Figur 7 eine vierte Ausführung eines Klimaschranks (nicht beansprucht) von oben mit abgenommener Abdeckung,
Figur 8 einen vertikalen Schnitt durch den Klimaschrank nach Figur 7,
Figur 9 eine Variante zur Ausführung nach Fig. 1 mit Bearbeitungsvorrichtung,
Figur 10 die Anordnung des Transportlifts und der Bearbeitungsvorrichtung der Ausführung nach Fig. 9,
Fig. 11 eine weitere Ausführung (nicht beansprucht) mit stationären Kassetten von oben gesehen und
Fig. 12 ein Klimaschrank mit Hochtemperaturzone.

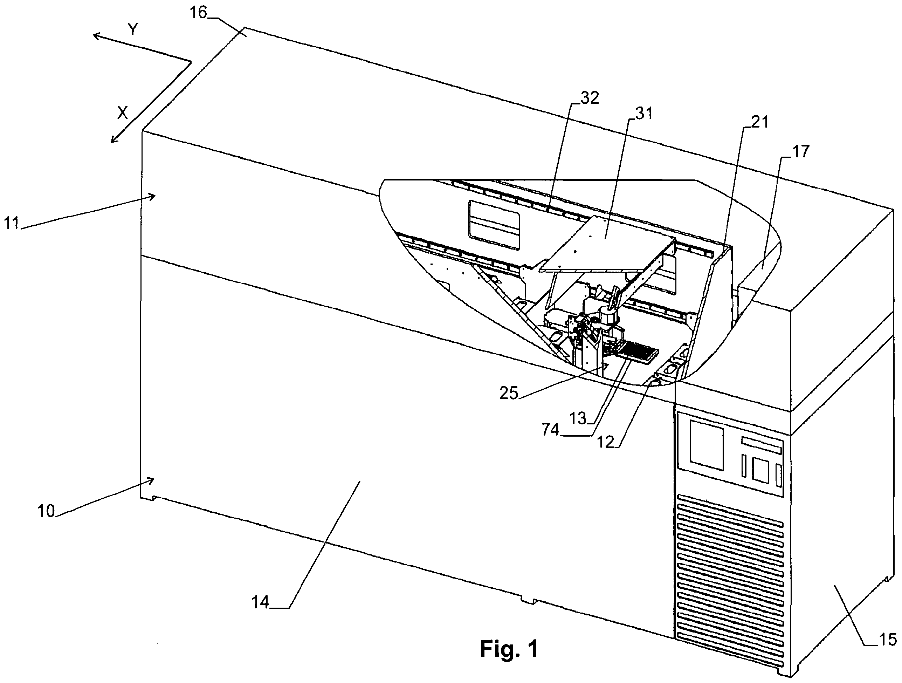

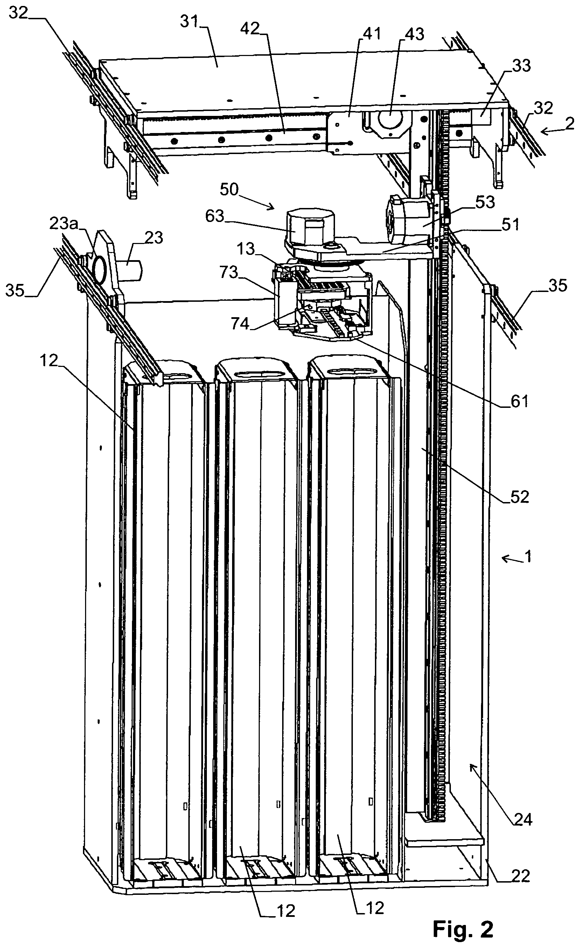

Die Figuren 1 und 2 zeigen eine erste Ausführung eines Klimaschranks mit einer unteren Zone 10 und einer oberen Zone 11. Das Lagergut wird in der unteren Zone 10, welche die Lagerzone des Geräts bildet, in entnehmbaren Kassetten 12 gelagert. Jede Kassette 12 bietet Platz zur Aufnahme von mehreren zu lagernden Objekten 13 übereinander. Bei den Objekten 13 handelt es sich vorzugsweise um sogenannte Mikrotiterplatten. Die vorliegende Erfindung kann jedoch auch zur Lagerung von anderen Laborgütern eingesetzt werden, wie z.B. Flaschen, Schalen, Reagensglashalter etc.

In der unteren Zone 10 bildet der Klimaschrank eine Kühlwanne 14, in welcher von einem Kühlaggregat 15 eine tiefe Temperatur aufrecht erhalten wird. Damit wird eine Tieftemperaturlagerung ermöglicht, während die Komponenten in der oberen Zone 11 weniger tiefen Temperaturen ausgesetzt sind.

Die obere Zone 11 ist von einer Abdeckung 16 abgedeckt und wird ebenfalls gekühlt, wenn auch auf eine weniger tiefe Temperatur. In der oberen Zone 11 ist ein Trockner 17 vorgesehen, welcher der Atmosphäre im Klimaschrank Feuchte entzieht, um ein Vereisen der Komponenten zu vermeiden. Beim Trockner 17 handelt es sich um eine Kühlvorrichtung, durch welche die Luft im Klimaschrank geführt wird und in welcher die Luft auf eine Temperatur gebracht wird, die tiefer ist als die Temperatur in den übrigen Teilen des Geräts. Dadurch wird der Luft gezielt und an einem definierten Ort Feuchte entzogen.

Die Kassetten 12 ruhen auf nebeneinander angeordneten regalartigen Trägern 22, wobei jeder Träger 22 mehrere, vorzugsweise mindestens drei, Kassetten 12 in einer horizontalen Richtung X nebeneinander aufnehmen kann, d.h. jeder Träger bietet Platz für eine Vielzahl von Lagerplätzen neben- und übereinander. In der unteren Zone 10 sind mehrere Träger 22 vorgesehen, und zwar in horizontaler Richtung Y nebeneinander angeordnet, wobei die Richtung Y senkrecht zur Richtung X steht.

Die Träger 22 sind in Richtung Y verschiebbar an einander gegenüber liegenden Führungen 35 an einem Tragrahmen 21 der oberen Zone 11 aufgehängt. Die Anzahl der Träger 22 ist so gewählt, dass sie den ihnen zur Verfügung stehenden Raum in Richtung Y bis auf eine Transportlücke 25 ausfüllen. Durch Verschieben einzelner Träger 22 in Richtung Y kann die Transportlücke 25 vor jedem der Träger 22 gebildet werden, so dass der später beschriebene Transportmechanismus auf die Lagerplätze in den Kassetten 12 zugreifen kann.

In der oberen Zone 11 ist ein Transportlift 50 aufgehängt. Der Transportlift 50 ist in Richtung Y entlang der Träger 22 mittels eines Längsverschiebetisches 31 sowie in Richtung X zwischen den Träger 22 mittels eines Querverschiebetisches 41 horizontal verfahrbar am Tragrahmen 21 angeordnet. Der Längsverschiebetisch 31 ist an Längsführungen 32 am Tragrahmen 21 befestigt und kann mit einem Längsverschiebeantrieb 33 in Richtung Y bewegt werden. Der Querverschiebetisch 41 ist an einer Querführung 42 am Längsverschiebetisch 31 befestigt und kann mit einem Querverschiebeantrieb 43 in Richtung X bewegt werden.

Der Transportlift 50 trägt einen in der Höhe verfahrbaren Liftwagen 51. Am Liftwagen 51 ist ein Drehtisch 61 angeordnet, der von einem Schwenkantrieb 63 um eine vertikale Achse verschwenkt werden kann.

Am Drehtisch 61 ist eine über einen Schaufelantrieb 73 horizontal verfahrbare Transportschaufel 74 angeordnet. Während des Transports liegt jeweils ein Lagerobjekt 13 auf der Transportschaufel 74.

Für den Zugriff auf das Lagergut wird der Transportlift 50 entlang der Träger 22 zur Transportlücke 25 gefahren. Der Liftwagen 51 kann nunmehr in die Transportlücke 25 zwischen die Träger 22 zum gewünschten Lagerplatz für das Lagerobjekt 13 gefahren werden. Für das Längsverfahren weisen die Träger einen Gang 24 auf, durch den die Liftsäule 52 des Transportlifts 50 horizontal in Richtung Y bewegt werden kann.

Die Träger 22 sind an den Führungen 35 in der oberen Zone 11 aufgehängt. Zur Verschiebung der Träger 22 in Richtung Y ist in der oberen Zone 11 eine Schiebevorrichtung bestehend aus einem Schiebemotor 23 und einem Schieberitzel 23a vorgesehen.

An einer Aussenwand der oberen Zone 11 ist auf der Höhe des Tragrahmens 21 eine automatisch betätigbare Schleuse (in Fig. 1 und 2 nicht gezeigt) angeordnet. Die Schleuse trennt das Klima im Nutzrauminneren von dem umgebenden Klima. Durch die Schleuse transportiert der Transportlift das Lagergut.

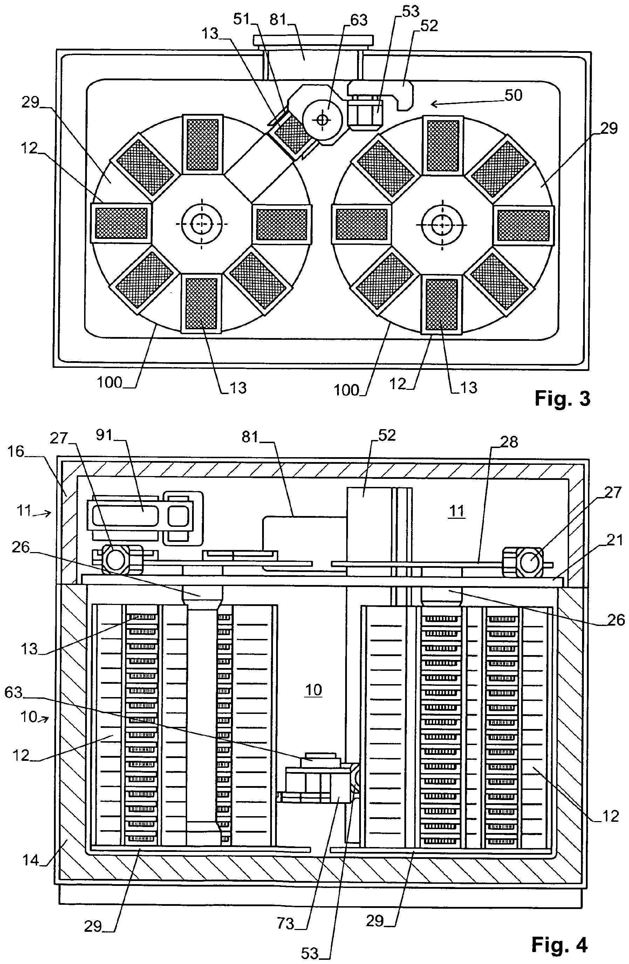

Ein zweites Ausführungsbeispiel des Klimaschranks (nicht beansprucht) ist in den Figuren 3 und 4 dargestellt und verwendet zwei Karusselle 100 zur Aufnahme des Lagerguts. Die Karusselle 100 sind in der unteren Zone 10 angeordnet. Auf einem Drehteller 29 jedes Karussells 100 sind entnehmbare Kassetten 12 sternförmig positioniert. Die Kassetten 12 dienen wiederum der Aufnahme des Lagerguts, indem jede Kassette 12 Platz für mehrere Objekte 13 übereinander bietet. Jeder Drehteller 29 ist an einer vertikalen Drehstange 26 am Tragrahmen 21 der oberen Zone 11 aufgehängt und drehbar gelagert. Mittels eines Drehtellerantriebes 27 in der oberen Zone 11 lässt sich jedes Karussell 100 relativ zum Transportlift 50 drehen, so dass jede Kassette 12 beim Transportlift 50 positioniert werden kann. Der Transportlift 50 ist seitlich zwischen den Karussellen 100 angeordnet.

Der Transportlift 50 ist ebenfalls am Tragrahmen 21 in der oberen Zone 11 befestigt. Er verfügt über einen Vertikalantrieb 53, einen Schwenkantrieb 63 und eine horizontale Verschiebevorrichtung, angetrieben von einem Schaufelantrieb 73. An einer Liftsäule 52 ist ein Liftwagen 51 gelagert und mit dem Vertikalantrieb 53 vertikal verfahrbar. Der Verfahrweg des Liftwagens 51 reicht von der Höhe der Drehteller 29 bis über den Tragrahmen 21.

Wiederum ist auch in diesem Klimaschrank in der oberen Zone 11 an der vertikalen Seitenwand eine Schleuse 81 vorgesehen, durch welche die Objekte 13 mit der Umgebung ausgetauscht werden können.

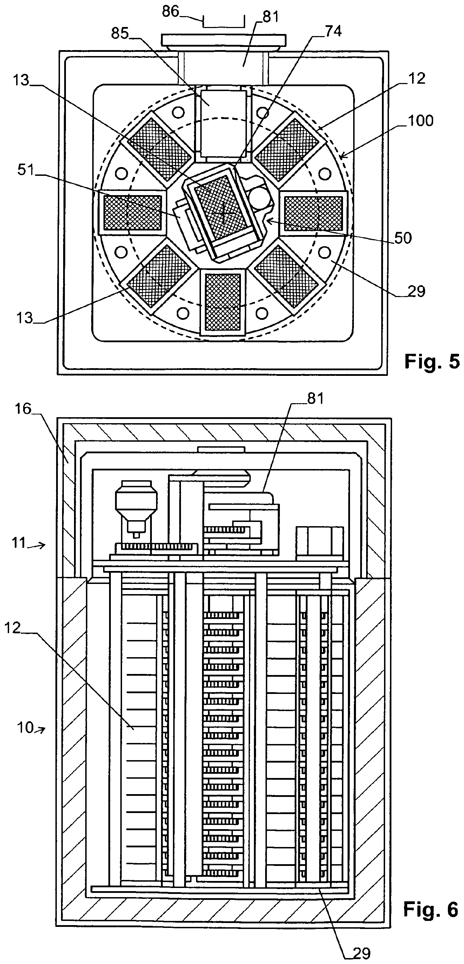

In einem dritten Ausführungsbeispiel (nicht beansprucht), welches in den Figuren 5 und 6 dargestellt ist, wird beispielhaft nur ein Karussell 100 verwendet, welches wiederum in der unteren Zone 10 angeordnet ist. Im Drehzentrum des Karussells 100 ist ein Transportlift 50 angeordnet. Das Lagergut befindet sich in entnehmbaren Kassetten 12, die konzentrisch auf dem Drehteller 29 und sternförmig um den Transportlift 50 herum angeordnet sind.

Wiederum besitzt der Transportlift 50 eine Schaufel 74, welche um die Karussellachse schwenkbar, parallel zur Karussellachse vertikal verfahrbar und horizontal ausfahrbar ist. Die Schaufel 74 ist am Liftwagen 51 angeordnet.

Zum Transport eines Lagerobjektes 13 dreht sich der Transportlift 50 mit der Schaufel 74 zu der Kassette 12, in der sich das gewünschte Lagerobjekt befindet. Der Liftwagen 51 verfährt auf die Etage der Kassette mit dem Lagerobjekt. Die Schaufel 74 wird ausgefahren und das Objekt wird aufgeladen. Der Liftwagen 51 bringt das Lagerobjekt 13 von der unteren Zone 10 mit den Kassetten 12 in die obere Zone 11, in der sich die automatisch betätigbare Schleuse 81 befindet.

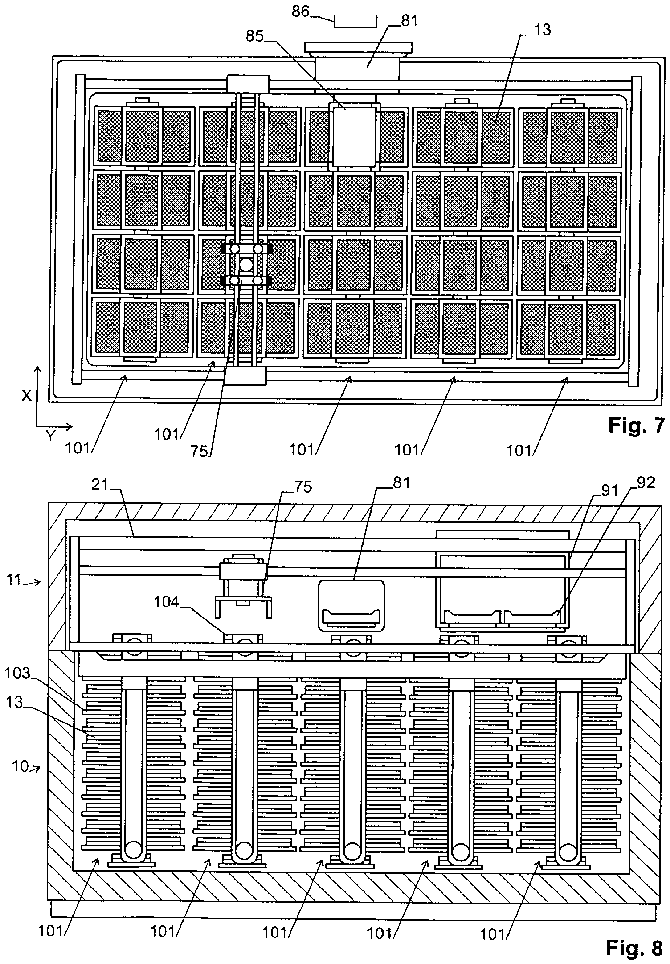

In einem vierten Ausführungsbeispiel (nicht beansprucht), welches in den Figuren 7 und 8 dargestellt ist, wird das Lagergut in einem Paternostersystem untergebracht. Das Paternostersystem besteht aus einer Vielzahl von Paternostern 101, welche in der unteren Zone 10 angeordnet sind. Jeder Paternoster 101 enthält eine Vielzahl von gondelartigen Lagertische 103 für die Objekte 13. Die Lagertische 103 sind so geführt, dass sie sich entlang geschlossener Transportbahnen entlang der Seiten des Paternosters nach oben und nach unten bewegen, und oben und unten am Paternoster von der einen Seite das Paternosters auf die andere Seite des Paternosters bewegt werden können. Dabei werden die Lagertische 103 nur parallelverschoben und nicht gekippt.

Vorzugsweise sind, wie aus Figur 7 und 8 ersichtlich, an jedem Paternoster 101 mehrere Transportbahnen für die Lagertische 103 in X-Richtung nebeneinander vorgesehen. In Y-Richtung sind mehrere Paternoster 101 nebeneinander angeordnet.

Das Paternostersystem hängt am Tragrahmen 21, der in der oberen Zone 11 angeordnet ist. Weiter ist in der oberen Zone 11 ein Transportgreifer 75 vorgesehen, welcher über jede Transportbahn der Paternoster 101 verfahren werden kann. Hierzu ist der Transportgreifer 75 in Richtung X und Y horizontal verfahrbar. Für den Zugriff auf eine gewünschte Lagerposition wird der Lagertisch 103 auf die obere Scheitelposition 104 seiner Transportbahn gebracht und der Paternoster 101 wird so lange in Betrieb gesetzt, bis sich die gewünschte Lagerposition in der Scheitelposition 104 befindet. Der Transportgreifer 75 wird über dem Lagertisch 103 positioniert, so dass das Lagerobjekt 13 vom Lagertisch 103 an Scheitelposition 104 des jeweiligen Paternosters 101 aufgegriffen und zur Schleuse 81 transportiert werden kann, oder umgekehrt.

Zum Transport durch die Schleuse 81 sind in der Ausführung nach den Figuren 7 und 8 eine Ablageposition 85 und eine Übergabeposition 86 vorgesehen. Die Ablageposition 85 befindet sich innerhalb der Schleuse 81 und die Übergabeposition 86 ausserhalb. Es ist ein geeigneter Übergabemechanismus vorgesehen, mit welchem das jeweilige Objekt zwischen der Ablageposition 85 und der Übergabeposition 86 transportiert werden kann.

Weiter ist in Figur 8 in der oberen Zone 11 eine Bearbeitungsvorrichtung 91 eingezeichnet. Diese besitzt mindestens einen Aufnahmetisch 92, welcher eines oder mehrere der Objekte 13 aufnehmen kann. Über den Aufnahmetisch 92 ist ein Bearbeitungsmechanismus vorgesehen (nicht gezeigt), wie z.B. eine optische Analyseanlage, mit welcher an den Objekten 13, beziehungsweise den darin befindlichen Proben, auf dem Aufnahmetisch 92 Manipulationen vorgenommen werden können.

In allen soweit beschriebenen Ausführungsbeispielen ist der Klimaschrank in eine untere Zone 10 und eine obere Zone 11 unterteilt, und es ist ein Kühlaggregat 15 vorgesehen, welches es erlaubt, in der unteren Zone 10 eine wesentlich tiefere Temperatur aufrecht zu erhalten als in der oberen Zone 11. Die Temperatur in der unteren Zone liegt vorzugsweise unterhalb von -30°C, insbesondere bei ca. -80°C, während in der oberen Zone vorzugsweise mehr als -30°C herrschen, z.B. -20°C, so dass mechanische Komponenten, Kabelisolierungen, Sensoren etc. noch ohne Spezialmassnahmen funktionieren.

Zudem sind in der unteren Zone 10 Lagerplätze zur Aufbewahrung der Objekte 13 vorgesehen. Zum Zugreifen auf die Objekte 13 an den Lagerplätzen in der unteren Zone 10 ist ein Vertikaltransportmechanismus vorgesehen, mit welchem die Objekte 13 zwischen der unteren Zone 10 und der oberen Zone 11 vertikal verschoben werden können. In den Ausführungen nach Figur 1 bis 6 wird der Vertikaltransportmechanismus vom Transportlift 50 gebildet, in der Ausführung nach Figur 7 und 8 von den Paternostern 101.

In der oberen Zone 11 sind die Schleuse 81 sowie mindestens ein Teil eines Horizontaltransportmechanismus vorgesehen. Der Horizontaltransportmechanismus erlaubt es, die Objekte 13 in horizontaler oder schräger Richtung zwischen dem Vertikaltransportmechanismus und der Schleuse 81 zu befördern. Unter "schräger Richtung" ist dabei eine Richtung mit einer Horizontalkomponente zu verstehen. Falls der Vertikal- und Horizontaltransportmechanismus mindestens teilweise aus den selben Komponenten bestehen, braucht dabei keine explizite Übergabe des Objekts zwischen Vertikal- und Horizontaltransportmechanismus zu erfolgen.

In der Ausführung nach Figur 1 und 2 wird der Horizontaltransportmechanismus vom Längsverschiebetisch 31, der Längsführung 32, dem Längsverschiebeantrieb 33 sowie dem Querverschiebetisch 41, der Querführung 42 und dem Querverschiebeantrieb 43 gebildet; in der Ausführung nach Figur 3 und 4 vom Liftwagen 51 und der Schaufel 74; in der Ausführung nach Figur 5 und 6 ebenfalls vom Liftwagen 51 und der Schaufel 74 sowie von den Teilen 85 und 86 und dem dazwischen angeordneten Transportmechanismus; und in der Ausführung nach Figur 7 und 8 vom Transportgreifer 75, der in Richtung X und Y horizontal verfahrbar ist sowie von den Teilen 85 und 86 und dem dazwischen angeordneten Transportmechanismus.

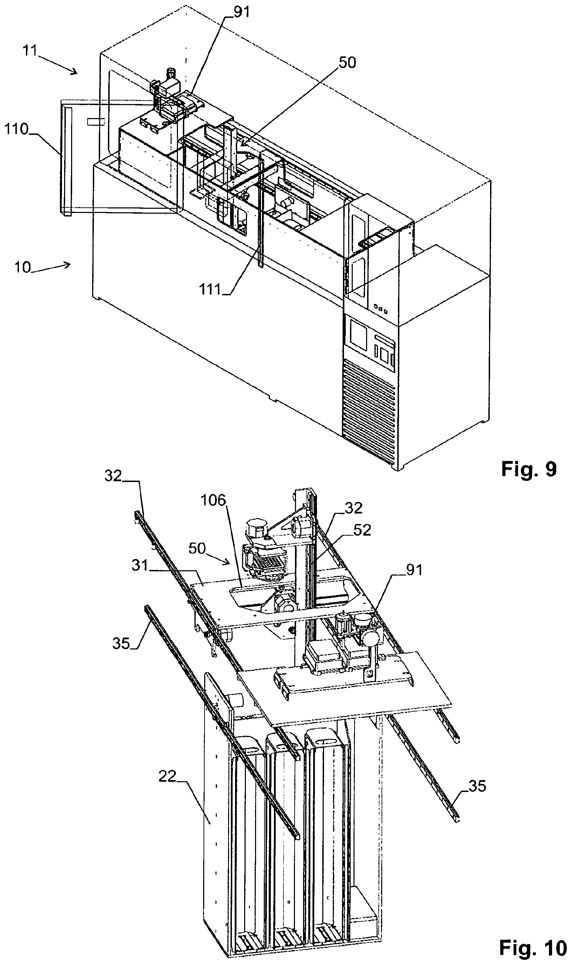

Eine weitere Ausführung der Erfindung wird in Fig. 9 und 10 gezeigt. Diese entspricht weitgehend der Ausführung nach Fig. 1 und 2, so dass im Folgenden nur die Unterschiede beschrieben werden.

Wie aus Fig. 9 ersichtlich, sind in dieser Ausführung in der Abdeckung 16 zwei Benutzertüren 110 und 111 angeordnet, welche Zugang in die in der oberen Zone 11 angeordneten Komponenten bieten.

Benutzertüre 110 ist bei einer Bearbeitungsvorrichtung 91 angeordnet. Damit der Transportlift 50 die Objekte 13 zur Bearbeitungsvorrichtung 91 bringen bzw. von dort abholen kann, ist er gegenüber der Ausführung nach Fig. 1 und 2 gegen oben verlängert. Hierzu ist im Längsverschiebetisch 31 eine Öffnung 106 vorgesehen, durch welche die Liftsäule 52 ragt.

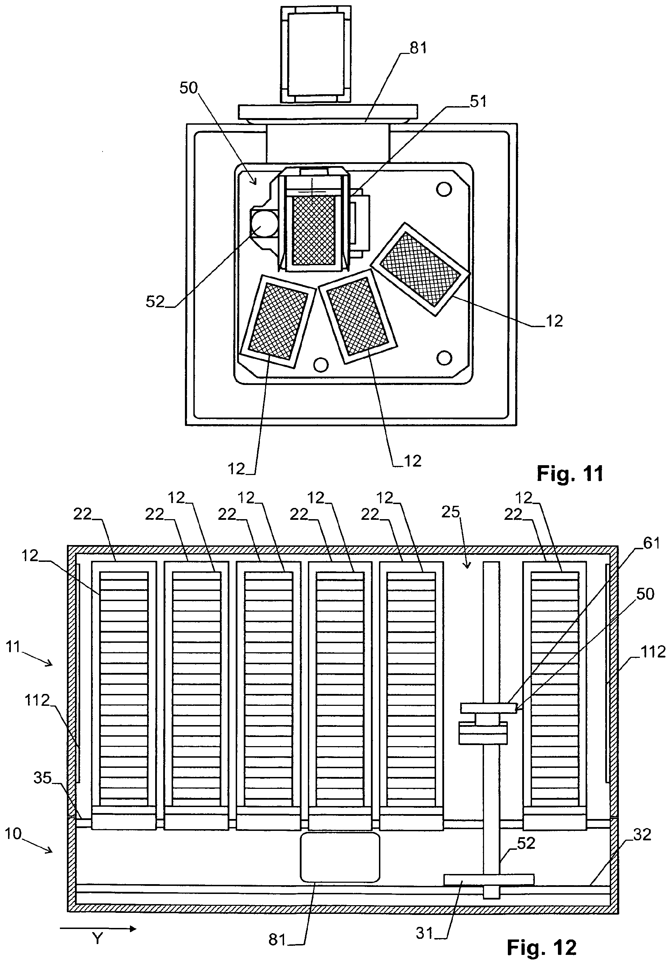

Fig. 11 zeigt eine (nicht beanspruchte) Ausführung eines etwas kleineren Geräts mit nur drei stationären Kassetten 12. Es entspricht ungefähr dem in Fig. 3 von US 6 478 524 beschriebenen Gerät, wobei jedoch der Klimaschrank wiederum, wie in den vorangehenden Ausführung, in eine untere und eine obere Zone unterteilt ist, wobei in der unteren Zone eine tiefere Temperatur herrscht als in der oberen Zone. Die Kassetten 12 sind in der unteren Zone angeordnet. Der Liftsäule 52 des Transportlifts 50 erstreckt sich von der unteren bis in die obere Zone, so dass der Liftwagen 51 die Objekte zwischen den beiden Zonen hin- und herfahren kann. Die Schleuse 81 ist, wie z.B. in der Ausführung nach Fig. 9 und 10, in der oberen Zone angeordnet, damit eine Öffnung derselben das Temperaturgleichgewicht in der unteren Zone nicht stört.

Denkbar ist auch eine Anordnung mit genau einem Kassette, oder mit zwei Kassetten, oder mit einer grösseren Kassettenzahl.

In allen soweit gezeigten Ausführungen ermöglich die gezeigte Unterteilung in zwei Zonen 10, 11, von denen in der unteren eine tiefere Temperatur herrscht als in der oberen, die Lagerung der Objekte 13 bei sehr tiefen Temperaturen.

Das gleiche Prinzip kann auch für Klimaschränke angewendet werden, bei denen die Objekte 13 bei erhöhter Temperatur gelagert werden. In diesem Fall ist das soweit gezeigte Gerät jedoch umzukehren, derart, dass die Lagerzone von der oberen Zone 11 gebildet wird, während die Schleusenöffnung 81 in der unteren Zone 10 zu liegen kommt. Auf diese Weise ist sichergestellt, dass die Warme Luft in der Lagerzone verbleibt, wenn die Schleusenöffnung 81 geöffnet wird. In der oberen Zone können dabei auch sehr hohe Temperaturen herrschen (beispielsweise 100 °C und mehr), insbesondere wenn die Führungen und Lager der beweglichen Teile weitgehend in der unteren Zone 10 angeordnet sind.

Ein Beispiel für ein solches Gerät ist in Fig. 12 illustriert. Es verwendet die Konstruktion analog zu jener von Fig. 10, wobei jedoch die Träger 22 in der oberen Zone 11 angeordnet sind. Die Träger 22 sind an Führungen 35 in der unteren Zone 10 geführt und in Richtung Y verschiebbar. Die Anzahl der Träger 22 ist wiederum so gewählt, dass sie den ihnen zur Verfügung stehenden Raum in Richtung Y bis auf eine Transportlücke 25 ausfüllen. Durch Verschieben einzelner Träger 22 in Richtung Y kann die Transportlücke 25 vor jedem der Träger 22 gebildet werden, so dass der Transportmechanismus auf die Lagerplätze in den Kassetten 12 zugreifen kann.

Wie ersichtlich, ist die Liftsäule 52 in diesem Fall an einer Längsführung 32 in der unteren Zone 10 gelagert und ragt in die obere Zone 11. Sie trägt den Transportlift 50 mit dem Drehwagen 61. Der Transportlift bzw. die Liftsäule 52 ist wiederum horizontal verschiebbar, und zwar in Richtung Y sowie in Richtung X (wobei Richtung X in Fig. 12 senkrecht zur Zeichenebene steht). Für die Verschiebung in Richtung X ist die Liftsäule 52 auf einem Längsverschiebetisch 31 gelagert, analog zur Ausführung 10.

Zum Heizen ist zumindest in der oberen Zone eine Heizung 112 angebracht.

**Bezugszeichenverzeichnis**

| | |
|---|---|
| 10 Untere Zone | 73 Schaufelantrieb |
| 11 Obere Zone | 74 Schaufel |
| 12 Kassette | 75 Transportgreifer |
| 13 Objekt | 81 Schleuse |
| 14 Kühlwanne | 82 Schleusentüre |
| 15 Kühlaggregat | 85 Ablageposition |
| 16 Abdeckung | 86 Übergabeposition |
| 17 Trockner | 91 Bearbeitungsvorrichtung |
| 20 Objektlager | 92 Aufnahmetisch |
| 21 Tragrahmen | 100 Karussell |
| 22 Träger | 101 Paternoster |
| 23 Schiebemotor | 102 Transportband |
| 23a Schieberitzel | 103 Lagertische |
| 24 Gang | 104 Scheitelposition |
| 25 Transportlücke | 106 Öffnung |
| 26 Drehstange | 110, 111 Benutzertüre |
| 27 Drehtellerantrieb | 112 Heizung |
| 28 Drehtelleraufhängung | |
| 29 Drehteller | |
| 30 Paternoster | |
| 31 Längsverschiebetisch | |
| 32 Längsführung | |
| 33 Längsverschiebantrieb | |
| 41 Querverschiebetisch | |
| 42 Querführung | |
| 43 Querverschiebantrieb | |
| 50 Transportlift | |
| 51 Liftwagen | |
| 52 Liftsäule | |
| 53 Vertikalantrieb | |
| 61 Drehwagen | |
| 63 Schwenkantrieb | |
| 72 Schaufelführung | |

## Patentansprüche

1. Klimaschrank für Laborgüter mit
einer Lagerzone, welche Lagerplätze zur Aufbewahrung der Laborgüter aufweist,
einem Transportmechanismus (31 - 33, 41 - 43, 50), welcher einen horizontal und vertikal verfahrbaren Liftwagen (51) aufweist zum Zugreifen auf die Lagerplätze der Lagerzone,
einer oberen Zone (11) und einer unteren Zone (10), wobei die Lagerplätze zur Aufbewahrung von Objekten in der unteren Zone (11) angeordnet sind,
mindestens einem Kühlaggregat (15), mit welchem zumindest die untere Zone (10) gekühlt ist und in der unteren Zone (10) eine tiefere Temperatur erzeugbar ist als in der oberen Zone (11),
einer Schleuse (81) und
einem mindestens teilweise in der oberen Zone angeordneten Horizontaltransportmechanismus (50; 101), wobei der Horizontaltransportmechanismus (50; 101) Teil des Transportmechanismus ist,
wobei der Transportmechanismus einen Vertikaltransportmechanismus (31 - 33, 41 - 43; 51, 74; 75) aufweist, mit welchem die Objekte (13) zwischen der unteren Zone (10) und der oberen Zone (11) bewegbar sind, wobei mit dem Horizontaltransportmechanismus (31 - 33, 41 - 43; 51, 74; 75) die Objekte (13) horizontal oder schräg zur Schleuse (81) bewegbar sind,
wobei der Vertikaltransportmechanismus (31 - 33, 41 - 43; 51, 74; 75) einen Transportlift (50) mit dem Liftwagen (51) aufweist und
wobei in der Lagerzone mehrere, entlang einer horizontalen Richtung Y verfahrbare Träger (22) angeordnet sind, welche die Lagerplätze tragen, wobei die Träger (22) derart horizontal verschiebbar sind, dass bei jedem Träger (22) die Bildung einer Transportlücke (25) zur Aufnahme des Liftwagens (51) ermöglicht ist, wobei jeder Träger (22) Platz für mehrere Lagerplätze übereinander bietet,
wobei jeder Träger (22) weiter Platz für mehrere Lagerplätze nebeneinander bietet, wobei an jedem Träger (22) mehrere Kassetten (12) in einer Richtung X nebeneinander angeordnet sind, wobei jede Kassette (12) mehrere Lagerplätze übereinander bildet, und wobei die Richtung X senkrecht zur Richtung Y steht, und
wobei der Transportlift (50) für den Zugriff auf das Lagergut entlang der Träger (22) zur Transportlücke (25) fahrbar, wozu ein Gang (24) vorgesehen ist, durch den eine Liftsäule (52) des Transportlifts (50) horizontal in Richtung Y bewegbar ist, und wobei der Transportlift (50) sodann in die Transportlücke (25) zwischen die Träger (22) zu einem gewünschten Lagerplatz für das Lagerobjekt fahrbar ist.

2. Klimaschrank nach Anspruch 1, wobei die Liftsäule (52) von der oberen Zone (11) in die untere Zone (10) ragt, und insbesondere wobei die Liftsäule (52) in der oberen Zone (10) befestigt ist.

3. Klimaschrank nach einem der Ansprüche 1 oder 2, wobei der Transportlift (50) horizontal in die Richtungen X und Y verfahrbar ist.

4. Klimaschrank nach einem der vorangehenden Ansprüche, wobei die Träger (22) verschiebbar an einem Tragrahmen (21) der oberen Zone (11) aufgehängt sind.

5. Klimaschrank nach einem der vorangehenden Ansprüche, wobei der Transportlift (50) eine um eine vertikale Achse schwenkbare Schaufel (74) aufweist.

6. Klimaschrank nach einem der vorangehenden Ansprüche, wobei in der oberen Zone (11) mindestens eine Bearbeitungsvorrichtung (91) zur Aufnahme mindestens eines Objekts (13) angeordnet ist.

7. Klimaschrank nach einem der vorangehenden Ansprüche, wobei die Lagerplätze in einer Kühlwanne (14) angeordnet sind.

8. Klimaschrank nach einem der vorangehenden Ansprüche, wobei die Schleuse (81) in der oberen Zone angeordnet ist.

9. Klimaschrank nach einem der vorangehenden Ansprüche mit einem Trockner (17) in der oberen Zone (11).

10. Klimaschrank nach einem der vorangehenden Ansprüche, wobei in der oberen Zone (11) mindestens eine Benutzertüre (110) angeordnet ist.

11. Klimaschrank nach Anspruch 1 mit
einer oberen Zone (11) und einer unteren Zone (10), wobei die Lagerplätze zur Aufbewahrung von Objekten in der oberen Zone (11) angeordnet sind,
mindestens einer Heizung (112), mit welcher zumindest die obere Zone (11) erwärmt ist und in der oberen Zone (11) eine höhere Temperatur erzeugbar ist als in der unteren Zone (10),
einer Schleuse (81) in der unteren Zone (10) und
wobei mit dem Transportmechanismus (50, 52) die Objekte (13) zwischen der oberen Zone (11) und der Schleuse (81) bewegbar sind

12. Klimaschrank nach Anspruch 11, wobei mit dem Vertikaltransportmechanismus (52) die Objekte (13) zwischen der oberen Zone (11) und der unteren Zone (10) bewegbar sind und wobei mit dem Horizontaltransportmechanismus (50) die Objekte (13) horizontal oder schräg zur Schleuse (81) bewegbar sind.

13. Klimaschrank nach einem der Ansprüche 11 oder 12, wobei die Liftsäule (52) von der unteren Zone (10) in die obere Zone (11) ragt, und insbesondere wobei die Liftsäule (52) in der unteren Zone (10) befestigt ist.

14. Klimaschrank nach Anspruch 13, wobei die Liftsäule (52) horizontal in eine erste und in eine zweite Richtung (X, Y) verfahrbar ist.

15. Klimaschrank nach einem der vorangehenden Ansprüche, wobei die Träger (22) einen Gang in Richtung Y bilden, in welchem die Liftsäule (52) des Transportmechanismus horizontal bewegbar ist, wobei der Liftwagen (51) an der Liftsäule (52) angeordnet ist.

16. Klimaschrank nach einem der vorangehenden Ansprüche, wobei jeder Träger (22) einen Schiebemotor (23) aufweist, mit welchem er horizontal verschiebbar ist.

17. Klimaschrank nach einem der vorangehenden Ansprüche, wobei die Lagerzone eine untere Zone (10) des Lagerschranks bildet, welche sich unterhalb einer oberen Zone (11) des Lagerschranks befindet, und wobei die Träger (22) in der oberen Zone aufgehängt sind, insbesondere an zwei einander gegenüber liegenden Führungen (35) .

## Claims

1. Climate chamber for laboratory goods, with
a storage zone having storage locations for keeping the laboratory goods,
a transport mechanism (31 - 33, 41 - 43, 50) having an elevator carriage (51) which is movable horizontally and vertically for accessing the storage locations of the storage zone,
a top zone (11) and a bottom zone (10), wherein the storage locations are arranged for keeping objects in the bottom zone (11),
at least a cooling device (15), by means of which at least the bottom zone (10) is cooled and in the bottom zone a lower temperature than in the top zone (11) is generated,
an airlock (81) and
a horizontal transport mechanism (50; 101) arranged at least partially in the top zone, wherein the horizontal transport mechanism (50; 101) is a part of the transport mechanism,
wherein the transport mechanism has a vertical transport mechanism (31 - 33, 41 - 43; 51, 74; 75) by means of which the objects (13) are movable between the bottom zone (10) and the top zone (11), wherein the objects (13) are movable horizontally or transversely to the airlock (81) with the horizontal transport mechanism (31 - 33, 41 - 43; 51, 74; 75),
wherein the vertical transport mechanism (31 - 33, 41 - 43; 51, 74; 75) has a transport elevator (50) with the elevator carriage (51) and
multiple movable carriers (22) carrying the storage locations are arranged in the storage zone along a horizontal direction Y, wherein the carriers (22) are shiftable horizontally in such a way that for each carrier (22) the formation of a transport gap (25) for receiving the elevator carriage (51) is made possible, wherein each carrier (22) offers space for multiple storage locations one above the other,
wherein each carrier (22) has furthermore space for multiple adjacent storage locations, wherein multiple cassettes (12) are arranged in adjacent manner in a direction X on each carrier (22), wherein each cassette (12) forms multiple storage locations one above the other, and wherein the direction X is perpendicular to the direction Y, and
wherein the transport elevator (50) is movable to the transport gap (25) along the carrier (22) for accessing the storage goods, a corridor (24) being provided for this task, through which an elevator column (52) of the transport elevator (50) is movable horizontally in direction Y, and wherein the transport elevator (50) is movable thereafter into the transport gap (25) between the carriers (22) to a desired storage location for the storage object.

2. Climate chamber according to claim 1, wherein the elevator column (52) protrudes from the top zone (11) into the bottom zone (10), and particularly wherein the elevator column (52) is attached in the top zone (10).

3. Climate chamber according to one of the claims 1 or 2, wherein the transport elevator (50) is movable horizontally in the directions X and Y.

4. Climate chamber according to one of the preceding claims, wherein the carriers (22) are suspended in a shiftable manner on a supporting frame (21) of the top zone (11).

5. Climate chamber according to one of the preceding claims, wherein the transport elevator (50) has a shovel (74) which is pivotable about a vertical axis.

6. Climate chamber according to one of the preceding claims, wherein at least a treatment device (91) for receiving at least an object (13) is arranged in the top zone (11).

7. Climate chamber according to one of the preceding claims, wherein the storage locations are arranged in a cooling vat (14).

8. Climate chamber according one of the preceding claims, wherein the airlock (81) is arranged in the top zone.

9. Climate chamber according to one of the preceding claims, with a dryer (17) in the top zone (11).

10. Climate chamber according to one of the preceding claims, wherein at least a user door (110) is arranged in the top zone (11).

11. Climate chamber according to claim 1, with
a top zone (11) and a bottom zone (10), wherein the storage locations are arranged for keeping objects in the top zone (11),
at least a heating (112), by means of which at least the top zone (11) is heated and a higher temperature is generated in the upper zone (11) than in the bottom zone (10),
an airlock (81) in the bottom zone (10) and
wherein the objects (13) are movable between the top zone (11) and the airlock (81) with the transport mechanism (50, 52).

12. Climate chamber according to claim 11, wherein the objects (13) are movable between the top zone (11) and the bottom zone (10) with the vertical transport mechanism (52) and wherein the objects (13) are movable horizontally or transversely to the airlock (81) with the horizontal transport mechanism (50).

13. Climate chamber according to one of the claims 11 or 12, wherein the elevator column (52) protrudes from the bottom zone (10) into the top zone (11), and particularly wherein the elevator column (52) is attached in the bottom zone (10).

14. Climate chamber according to claim 13, wherein the elevator column (52) is movable horizontally in a first and a second direction (X, Y).

15. Climate chamber according to one of the preceding claims, wherein the carriers (22) form a path in direction Y, inside which the elevator column (52) of the transport mechanism is movable horizontally, wherein the elevator carriage (51) is arranged at the elevator column (52) .

16. Climate chamber according to one of the preceding claims, wherein each carrier (22) has a shifting motor (23), by means of which it is shiftable horizontally.

17. Climate chamber according to one of the preceding claims, wherein the storage zone forms a bottom zone (10) of the storage chamber, which is located below a top zone (11) of the storage chamber, and wherein the carriers (22) are suspended in the top zone, particularly on two guides (35) which face each other.

## Revendications

1. Chambre climatique pour des articles de laboratoire, avec
une zone de stockage ayant des emplacements de stockage pour garder les articles de laboratoire,
un mécanisme de transport (31 - 33, 41 - 43, 50) ayant un chariot d'ascenseur (51) qui est déplaçable horizontalement et verticalement afin d'accéder les emplacements de stockage de la zone de stockage,
une zone supérieure (11) et une zone inférieure (10), les emplacements de stockage étant arrangés pour garder des objets dans la zone inférieure (11),
au moins un dispositif de refroidissement (15), à l'aide duquel au moins la zone inférieure (10) est refroidie et une température inférieure est générée dans la zone inférieure que dans la zone supérieure (11),
un sas (81) et
un mécanisme de transport horizontal (50; 101) arrangé au moins partiellement dans la zone supérieure, le mécanisme de transport horizontal (50; 101) faisant partie du mécanisme de transport,
le mécanisme de transport ayant un mécanisme de transport vertical (31 - 33, 41 - 43; 51, 74; 75) à l'aide duquel les objets (13) sont déplaçables entre la zone inférieure (10) et la zone supérieure (11), les objets (13) étant déplaçables horizontalement ou transversalement par rapport au sas (81) avec le mécanisme de transport horizontal (31 - 33, 41 - 43; 51, 74; 75),
le mécanisme de transport vertical (31 - 33, 41 - 43; 51, 74; 75) ayant un ascenseur de transport (50) avec le chariot d'ascenseur (51) et
des multiples chariots déplaçables (22) qui portent les emplacements de stockage étant arrangés dans la zone de stockage le long d'une direction horizontale Y, les chariots (22) étant déplaçables horizontalement de sorte que pour chaque chariot (22) la formation d'un écart de transport (25) pour recevoir le chariot d'ascenseur (51) est rendu possible, chaque chariot (22) offrant un espace pour des multiples emplacements de stockage l'un au-dessus de l'autre,
chaque chariot (22) ayant en outre un espace pour des multiples emplacements de stockage adjacents, des multiples cassettes (12) étant arrangées de manière adjacente dans une direction X sur chaque chariot (22), chaque cassette (12) formant des multiples emplacements de stockage l'un au-dessus de l'autre, et la direction X étant perpendiculaire par rapport à la direction Y, et
l'ascenseur de transport (50) étant déplaçable à l'écart de transport (25) le long du chariot (22) afin d'accéder les articles de stockage, un corridor (24) étant prévu pour cet objectif, à travers lequel une colonne d'ascenseur (52) de l'ascenseur de transport (50) est déplaçable horizontalement en direction Y, et l'ascenseur de transport (50) étant ensuite déplaçable dans l'écart de transport (25) entre les chariots (22) à un emplacement de stockage souhaité pour l'objet de stockage.

2. Chambre climatique selon la revendication 1, la colonne d'ascenseur (52) faisant saille à partir de la zone supérieure (11) dans la zone inférieure (10), et particulièrement la colonne d'ascenseur (52) étant attachée dans la zone supérieure (10).

3. Chambre climatique selon l'une des revendications 1 ou 2, l'ascenseur de transport (50) étant déplaçable horizontalement dans les directions X et Y.

4. Chambre climatique selon l'une des revendications précédentes, les chariots (22) étant suspendus de manière déplaçable sur un cadre de support (21) de la zone supérieure (11).

5. Chambre climatique selon l'une des revendications précédentes, l'ascenseur de transport (50) ayant une pelle (74) qui est pivotable autour d'un axe vertical.

6. Chambre climatique selon l'une des revendications précédentes, au moins un dispositif de traitement (91) pour recevoir au moins un objet (13) étant arrangé dans la zone supérieure (11).

7. Chambre climatique selon l'une des revendications précédentes, les emplacements de stockage étant arrangés dans une cuve de refroidissement (14).

8. Chambre climatique selon l'une des revendications précédentes, le sas (81) étant arrangé dans la zone supérieure.

9. Chambre climatique selon l'une des revendications précédentes, avec un sécheur (17) dans la zone supérieure (11).

10. Chambre climatique selon l'une des revendications précédentes, au moins une porte d'utilisateur (110) étant arrangée dans la zone supérieure (11).

11. Chambre climatique selon la revendication 1, avec
une zone supérieure (11) et une zone inférieure (10),
les emplacements de stockage étant arrangés pour garder des objets dans la zone supérieure (11),
au moins un chauffage (112), à l'aide duquel au moins la zone supérieure (11) est chauffée et une température supérieure étant générée dans la zone supérieure (11) que dans la zone inférieure (10),
un sas (81) dans la zone inférieure (10) et
les objets (13) étant déplaçables entre la zone supérieure (11) et le sas (81) avec le mécanisme de transport (50, 52).

12. Chambre climatique selon la revendication 11, les objets (13) étant déplaçables entre la zone supérieure (11) et la zone inférieure (10) avec le mécanisme de transport vertical (52) et les objets (13) étant déplaçables horizontalement ou transversalement par rapport au sas (81) avec le mécanisme de transport (50).

13. Chambre climatique selon l'une des revendications 11 ou 12, la colonne d'ascenseur (52) faisant saille à partir de la zone inférieure (10) dans la zone supérieure (11), et particulièrement la colonne d'ascenseur (52) étant attachée dans la zone inférieure (10) .

14. Chambre climatique selon la revendication 13, la colonne d'ascenseur (52) étant déplaçable horizontalement dans une première et une deuxième direction (X, Y).

15. Chambre climatique selon l'une des revendications précédentes, les chariots (22) formant un chemin dans la direction Y, à l'intérieur duquel la colonne d'ascenseur (52) du mécanisme de transport est déplaçable horizontalement, le chariot d'ascenseur (51) étant arrangé à la colonne d'ascenseur (52).

16. Chambre climatique selon l'une des revendications précédentes, chaque chariot (22) ayant un moteur de déplacement (23) à l'aide duquel il est déplaçable horizontalement.

17. Chambre climatique selon l'une des revendications précédentes, la zone de stockage formant une zone inférieure (10) de la chambre de stockage, située au-dessous d'une zone supérieure (11) de la chambre de stockage, et les chariots (22) étant suspendus dans la zone supérieure, particulièrement sur deux guidages (35) arrangés l'un en face de l'autre.
